# EUROPÄISCHE PATENTSCHRIFT

(11) **EP 3 770 360 B1**
(45) Veröffentlichungstag und Bekanntmachung des Hinweises auf die Patenterteilung: **30.04.2025**
(21) Anmeldenummer: 20187014.4
(22) Anmeldetag: 21.07.2020
(51) Int. Cl.: E05B 3/04, E05B 3/06, F16B 21/18

(54) **SPRENGRING, DRÜCKERROSETTE, RASTSYSTEM FÜR TÜR- ODER FENSTERBESCHLÄGE, SOWIE TÜR- ODER FENSTERBESCHLAG**
DOOR OR WINDOW FITTING, SNAP RING, PUSH ESCUTCHEON AND LOCKING SYSTEM FOR DOOR OR WINDOW FITTINGS
CIRCLIP, ROSETTE DE POUSSOIR, SYSTÈME D'ENCLIQUETAGE POUR FERRURES DE PORTE OU DE FENÊTRE, AINSI QUE FERRURE DE PORTE OU DE FENÊTRE

(30) Priorität: 22.07.2019 CH 9302019; 13.07.2020 EP 20185517
(43) Veröffentlichungstag der Anmeldung: 27.01.2021
(73) Patentinhaber: Glutz AG, 4502 Solothurn (CH)
(72) Erfinder: Bui, Phuc, 4500 Solothurn (CH); Mosimann, Patric, 4573 Lohn-Ammansegg (CH)
(74) Vertreter: BOVARD AG

(56) Entgegenhaltungen:
- EP-A1- 1 022 413
- EP-A1- 2 141 310
- EP-A1- 3 225 857
- EP-A2- 2 031 156
- WO-A1-2004/063576
- WO-A2-2010/129407
- DE-A1- 102013 012 749
- DE-U1- 202013 100 325
- GB-A- 329 937
- GB-A- 331 326

## Beschreibung

### Technisches Gebiet der Erfindung

Die vorliegende Erfindung bezieht sich auf ein Rastsystem für Tür- oder Fensterbeschläge, umfassend einen Sprengring, der eine einfache und schnelle Montage und Demontage des Rastsystems, insbesondere des durch Einrasten befestigten Elements, erlaubt. Die vorliegende Erfindung betrifft ausserdem auch eine Drückerrosette für Rastsysteme für Tür- oder Fensterbeschläge, mittels welcher die Drehungsfreiheit eines Sprengrings um die Drehachse des Systems begrenzt wird. Dadurch können die Montage und Demontage des Rastsystems einfach und schnell erfolgen. Des Weiteren können mittels des erfindungsgemässen Rastsystems für Tür- oder Fensterbeschläge Griffe, Knaufe und andere Betätigungselemente schnell und einfach an einem Beschlag montiert und wieder demontiert werden. Schliesslich betrifft die vorliegende Erfindung auch Beschläge, welche ein erfindungsgemässes Rastsystem umfassen.

### Stand der Technik

Tür- oder Fensterbeschläge, welche ein Rastsystem für die Montage des Drückers aufweisen, sind aus dem Stand der Technik bekannt. Die bekannten Systeme basieren auf einem Drücker mit einer Dornhülse mit einem Einstich. Die Dornhülse wird während der Montage durch die Drückerrosette eingeführt und spreizt dabei einen Sprengring, wobei der Sprengring schliesslich in den Einstich der Dornhülse einrastet. Mit einem solchen Mechanismus werden auf eine einfache Art und Weise die Dornhülse, beziehungsweise die Betätigungselemente, und die Drückerrosette zusammengehalten.

Leider weisen die aus dem Stand der Technik bekannten Rastsysteme für Tür- oder Fensterbeschläge gewisse Limitierungen auf.

Erstens werden üblicherweise auf beiden Türseiten Betätigungselemente angebracht, welche mit einem Vierkantdorn verbunden sind. Der Vierkantendorn ist im mittleren Bereich auch mit einem Schloss verbunden. Aufgrund der Fertigungstoleranzen bei der Verarbeitung von Türen, können die Drücker aber nie perfekt konzentrisch zueinander ausgerichtet werden. Dies führt zu erhöhter Reibung, so dass die Kraft der Schlossfeder in gewissen Fällen nicht mehr ausreicht, um die Drücker nach der Betätigung wieder in Nullstellung zu bringen. Dies verhindert auch eine einfache Montage des Beschlags.

Zweitens kann sich der Sprengring bei den bekannten Rastsystemen während der Montage gegenüber der Drehachse des Systems bewegen, was die Montage erschwert. Darüber hinaus kann sich der Sprengring bei den bekannten Systemen im Laufe der Zeit unbegrenzt um die Drehachse des Drückers drehen, was eine Demontage des Systems fast verunmöglicht. Schliesslich erlauben die bekannten Sprengringe keine einfache Demontage mit einer dafür vorgesehenen Zange, da es mit diesen Sprengringen nicht möglich ist, zu garantieren, dass die Zange während der Demontage mit dem Sprengring in Eingriff bleibt.

So ist aus WO 2004/063576 A1 ein als Sicherheits- oder Sprengring ausgebildetes Rastelement bekannt, welches eine an einer Stelle geöffnete ringförmige Scheibe mit mindestens einem Bereich reduzierter Breite ist. Der mindestens eine Bereich reduzierter Breite zwischen einer inneren Umfangslinie und einer äusseren Umfangsline liegt der Ringöffnung gegenüber. Der Sprengring wird in einem Einstich aufgenommen und ist in dem montierten Zustand um die Drehachse des Drückers drehbar.

Ferner ist aus GB 329 937 A1 bekannt, eine in einer Nut aufgenommenen Feder zur drehfesten Verbindung zwischen einem Knauf und einer Platte, wobei ein radialer Anschlag in der Nut vorgesehen ist, dass der Ring mit der Drehbewegung des Knaufs mit dreht.

Ausgehend vom Stand der Technik liegt der vorliegenden Erfindung daher die Aufgabe zugrunde, vorbesagte Nachteile zu überwinden und eine Drückerrosette, ein Rastsystem sowie einen Beschlag zur Verfügung zu stellen, die eine einfachere und schnelle Montage und Demontage des Tür- oder Fensterbeschlags ermöglichen.

### Zusammenfassung der Erfindung

Gemäss der vorliegenden Erfindung werden diese Ziele vor allem durch die Elemente der Ansprüche 1, 3 und 9 erreicht. Weitere vorteilhafte Ausführungsformen gehen ausserdem aus den abhängigen Ansprüchen und der Beschreibung hervor.

Die Ziele der vorliegenden Erfindung werden insbesondere erreicht durch eine Drückerrosette für Rastsysteme eines Tür- oder Fensterbeschlags, umfassend eine Sprengringauflagefläche für die Aufnahme eines Sprengrings, wobei die Sprengringauflagefläche eine nach aussen gerichtete sich in axialer Richtung erstreckende Prägung aufweist.

Dank einer erfindungsgemässen Drückerrosette kann sich der Sprengring des Systems nur begrenzt um die Drehachse des Rastsystems, beziehungsweise des Betätigungselements des Beschlags, bewegen. Es kann damit gewährleistet werden, dass sich der Sprengring immer in einer für die Demontage günstigen Position befindet.

In einer ersten bevorzugten Ausführungsform der Drückerrosette der Erfindung ist die Prägung pyramidenförmig. Dadurch ist die Positionierung von einer für die Demontage vorgesehenen Zange einfacher.

Erreicht werden die Ziele der vorliegenden Erfindung zudem auch durch ein Rastsystem für einen Tür- oder Fensterbeschlag, umfassend eine erfindungsgemäße Drückerrosette, eine Dornhülse an welche ein Betätigungselement drehbarfest anbringbar ist, wobei die Dornhülse endseitig eine konische Einfuhrfläche und daran anschliessend einen Einstich aufweist, einen Sprengring, welcher so bemessen ist, dass er über die konische Einfuhrfläche der Dornhülse schiebbar ist und dabei aufgespreizt wird, und dass er in den Einstich einrastbar ist, wobei sich der Sprengring zwischen der Drückerrosette und einer Abdeckhülse oder zwischen der Drückerrosette und einer Abdeckscheibe befindet, und wobei die Dornhülse um eine Drehachse des Rastsystems drehbar ist, wobei der Sprengring an einer Stelle eine Ringöffnung und die Drückerrosette eine Prägung aufweisen, wobei der Sprengring derart orientiert ist, dass die Ringöffnung mit der Position der Prägung der Drückerrosette zusammenfällt. Dank eines solchen Rastsystems sind Montage und Demontage besonders einfach, da sich der Sprengring immer in einer für die Montage oder für die Demontage günstigen Position befindet. Dies ist im Gegensatz zu den aus dem Stand der Technik bekannten Rastsystemen, bei welchen sich der Sprengring gegenüber der Drehachse des Systems bewegen kann, was zu Schwierigkeiten bei der Montage und bei der De\montage führt.

In einer ersten bevorzugten Ausführungsform des Rastsystems der Erfindung sind die Dimensionen der Prägung so ausgewählt, dass der Sprengring nur um einen Winkel um die Drehachse des Rastsystems drehbar ist, welcher kleiner oder gleich wie der Winkel ist, welcher durch die Ringöffnung definiert ist. Dadurch ist die Position des Sprengrings noch besser definiert und die Demontage noch einfacher.

In einer anderen bevorzugten Ausführungsform des Rastsystems der Erfindung sind die Dimensionen des Einstichs und der Aussendurchmesser der Dornhülse so gewählt, dass die Dornhülse um einen Winkel von bis zu 4°, vorteilhafterweise bis zu 2°, gegenüber der Drehachse des Rastsystems kippbar ist.

Rastsysteme für Tür- oder Fensterbeschläge werden vor allem in Situationen gebraucht, in welchen die Betätigungselemente des Beschlags auf beiden Türseiten angebracht werden. Die Dornhülsen, an welchen die Betätigungselemente angebracht sind, sind mit einem Vierkantdorn verbunden, welcher im mittleren Bereich auch mit dem Schloss verbunden ist. Aufgrund der Fertigungstoleranzen bei der Verarbeitung der Türen, sind die Dornhülsen meistens nicht konzentrisch zueinander ausgerichtet. Dies führt zu erhöhter Reibung, so dass die Kraft der Schlossfeder in gewissen Fällen nicht mehr ausreicht, um die Drücker nach der Betätigung wieder in Nullstellung zu bringen. die Dornhülse endseitig eine konische Einfuhrfläche und daran anschliessend einen Einstich aufweist, einen Sprengring, welcher so bemessen ist, dass er über die konische Einfuhrfläche der Dornhülse schiebbar ist und dabei aufgespreizt wird, und dass er in den Einstich einrastbar ist, wobei sich der Sprengring zwischen einer Drückerrosette und einer Abdeckhülse oder zwischen einer Drückerrosette und einer Abdeckscheibe befindet, und wobei die Dornhülse um eine Drehachse des Rastsystems drehbar ist, wobei der Sprengring an einer Stelle eine Ringöffnung und die Drückerrosette eine Prägung aufweisen, wobei der Sprengring derart orientiert ist, dass die Ringöffnung mit der Position der Prägung der Drückerrosette zusammenfällt. Mit einem erfindungsgemässen Rastsystem ist die Funktionstüchtigkeit des Beschlags auch dann gewährleistet, wenn es grössere Abweichungen in den Ausrichtungen der Dornhülsen gibt. Das erfindungsgemässe Rastsystem gewährleistet dabei nicht nur, dass der Beschlag einwandfrei funktionieren kann; es ermöglicht ausserdem auch eine einfache Montage des Beschlags und des Betätigungselements, beziehungsweise Demontage. Wenn die Toleranz der Ausrichtung der Dornhülsen grösser ist, ist es einfacher, die Dornhülsen mittels Vierkantendorn zu verbinden.

Wie oben erwähnt, werden Rastsysteme für Tür- oder Fensterbeschläge vor allem in Situation gebraucht, in welchen die Betätigungselemente des Beschlags auf beiden Türseiten angebracht werden. Die Dornhülsen, an welchen die Betätigungselemente angebracht sind, sind mit einem Vierkantdorn verbunden, welcher im mittleren Bereich auch mit dem Schloss verbunden ist. Aufgrund der Fertigungstoleranzen bei der Verarbeitung der Türen, sind die Dornhülsen meistens nicht konzentrisch zueinander ausgerichtet. Dies führt zu erhöhter Reibung, so dass die Kraft der Schlossfeder in gewissen Fällen nicht mehr ausreicht, um die Drücker nach der Betätigung wieder in Nullstellung zu bringen. Mit einem erfindungsgemässen Rastsystem ist die Funktionstüchtigkeit des Beschlags auch dann gewährleistet, wenn es grössere Abweichungen in den Ausrichtungen der Dornhülsen gibt. Das erfindungsgemässe Rastsystem gewährleistet nicht nur, dass der Beschlag einwandfrei funktionieren kann, sondern ermöglicht auch eine einfache Montage beziehungsweise Demontage. Wenn die Toleranz der Ausrichtung der Dornhülsen grösser ist, ist es einfacher die Dornhülsen mittels Vierkantendorn zu verbinden.

In einer bevorzugten Ausführungsform des Rastsystems der Erfindung befindet sich in radialer Richtung zwischen Dornhülse und Drückerrosette ein Gleitelement. Dadurch werden die Reibungswiderstände zwischen Dornhülse und Drückerrosette reduziert, was eine bessere Funktionalität des Beschlags ermöglicht.

In einer weiteren bevorzugten Ausführungsform des Rastsystems der Erfindung umfasst das System eine Drückerrosette gemäss vorliegender Erfindung. Dadurch sind Montage und Demontage besonders einfach, da sich der Sprengring gegenüber der Drehachse des Systems weniger bewegen kann.

In einer anderen bevorzugten Ausführungsform des Rastsystems der Erfindung ist der Sprengring derart orientiert, dass die Ringöffnung und die Position der Prägung der Drückerrosette übereinstimmen. Dadurch befindet sich der Sprengring immer in einer für die Demontage günstigen Position.

In einer anderen bevorzugten Ausführungsform des Rastsystems der Erfindung sind die Dimensionen der Prägung derart ausgewählt, dass der Sprengring nur um einen Winkel um die Drehachse des Rastsystems drehbar ist, welcher kleiner oder gleich wie der Winkel ist, welcher durch die Ringöffnung definiert ist. Dadurch ist die Position des Sprengrings noch besser definiert und die Demontage noch einfacher.

In einer weiteren Ausführungsform befindet sich zwischen Dornhülse und Drückerrosette in radialer Richtung ein Gleitelement. Dadurch werden die Reibungswiderstände zwischen Dornhülse und Drückerrosette reduziert, was eine bessere Funktionalität des Beschlags ermöglicht.

In einer anderen Ausführungsform umfasst das Rastsystem einen Sprengring in Form einer an einer Stelle geöffneten ringförmigen Scheibe, umfassend eine innere Kontur und eine äussere Kontur, wobei der Sprengring eine Einbuchtung aufweist, welche einen Bereich reduzierter Breite der Scheibe darstellt, wobei sich die Einbuchtung an der der Ringöffnung gegenüberliegende Seite der Scheibe befindet, und wobei der Springring bei der Ringöffnung Zangenfreistellungen für das Eingreifen von Zangenbacken einer Zange, insbesondere einer Greifzange oder einer Spreizzange, aufweist, wobei sich der Durchmesser der äusseren Kontur des Sprengrings in Richtung der Ringöffnung vergrössert.

Dank der Form des Sprengrings kann eine für die Demontage vorgesehene Zange einfach positioniert werden und während der Demontage nicht abrutschen. Es ist besonders vorteilhaft, da die Demontage eines Sprengrings, beziehungsweise eines Rastsystems oder von Betätigungselementen, oft auf sehr engstem Raum durchgeführt werden muss.

In einer zusätzlichen bevorzugten Ausführungsform des Rastsystems vergrössert sich der Durchmesser der äusseren Kontur des Sprengrings in Richtung der Einbuchtung. Dank dieser optimierten Form der äusseren Kontur des Sprengrings wird gewährleistet, dass sich der Sprengring gegenüber der Drehachse des Rastsystems weniger als die aus dem Stand der Technik bekannten Sprengringe bewegen kann. Dadurch sind sowohl die Montage als auch die Demontage des Rastsystems, beziehungsweise der Betätigungselemente, einfacher. Die Gestaltung der Kontur verhindert ausserdem, dass sich der Sprengring um die Drehachse des Rastsystems drehen kann. Damit befindet sich die Ringöffnung immer in einer für die Demontage günstigen Position, was mit den aus dem Stand der Technik bekannten Sprengringen nicht gewährleistet ist. Es ist wichtig zu beachten, dass die Form der Kontur des Sprengrings an sich unabhängig vom Vorhandensein von Zangenfreistellungen sowohl für die Montage als auch für die Demontage des Rastsystems, beziehungsweise der Betätigungselemente, vorteilhaft sein kann

Erreicht werden die Ziele der vorliegenden Erfindung ausserdem auch durch einen Tür- oder Fensterbeschlag, umfassend eine Drückerrosette gemäss vorliegender Erfindung und/oder ein Rastsystem gemäss vorliegender Erfindung. Der erfindungsgemässe Beschlag ist dann besonders einfach zu montieren und zu demontieren. Die Funktionalität des Beschlags wird dadurch auch verbessert.
Weitere Einzelheiten der Erfindung gehen aus der nun folgenden Beschreibung der bevorzugten Ausführungsformen der Erfindung hervor, welche in den beigelegten Zeichnungen dargestellt sind. Aus der Beschreibung lassen sich auch die weiteren Vorteile der vorliegenden Erfindung entnehmen sowie Anregungen und Vorschläge, wie die Erfindungsgegenstände im Rahmen des Beanspruchten abgeändert oder auch weiterentwickelt werden könnte.

### Kurzbeschreibung der Zeichnungen

Figur 1 zeigt eine perspektivische schematische Ansicht eines erfindungsgemässen Rastsystems gemäss einer ersten bevorzugten Ausführungsform;
Figur 2 zeigt eine perspektivische schematische Schnittansicht eines erfindungsgemässen Rastsystems gemäss der ersten bevorzugten Ausführungsform;
Figur 3 zeigt eine perspektivische schematische Ansicht eines erfindungsgemässen Rastsystems gemäss der ersten bevorzugten Ausführungsform, bei welchem die Abdeckhülse ausgeblendet ist;
Figur 4 zeigt eine perspektivische schematische Explosionsansicht eines erfindungsgemässen Rastsystems gemäss der ersten bevorzugten Ausführungsform;
Figur 4a zeigt eine perspektivische schematische Detailansicht einer erfindungsgemässen Drückerrosette gemäss einer ersten bevorzugten Ausführungsform;
Figur 5a zeigt eine erste Schnittansicht eines erfindungsgemässen Rastsystems gemäss der ersten bevorzugten Ausführungsform;
Figur 5b zeigt eine zweite Schnittansicht eines erfindungsgemässen Rastsystems gemäss der ersten bevorzugten Ausführungsform;
Figur 6 zeigt eine schematische Draufsicht eines Sprengrings für das erfindungsgemässe Rastsystem;
Figur 7 zeigt einen Vergleich zwischen der Kontur eines Sprengrings für das erfindungsgemässe Rastsystem und deren einer perfekten ringförmigen Scheibe;
Figur 8 illustriert die Positionierung einer für die Demontage vorgesehenen Zange in den Zangenfreistellungen eines Sprengrings für das erfindungsgemässe Rastsystem;
Figur 9 zeigt eine perspektivische schematische Ansicht einer erfindungsgemässen Drückerrosette gemäss einer ersten bevorzugten Ausführungsform;
Figur 10 zeigt eine perspektivische schematische Schnittansicht eines erfindungsgemässen Rastsystems gemäss einer zweiten bevorzugten Ausführungsform;
Figur 11 zeigt eine perspektivische schematische Ansicht eines erfindungsgemässen Rastsystems gemäss der zweiten bevorzugten Ausführungsform;
Figur 12 zeigt eine perspektivische schematische Ansicht eines erfindungsgemässen Rastsystems gemäss der zweiten bevorzugten Ausführungsform, bei welchem die Abdeckhülse ausgeblendet ist;
Figur 13 zeigt eine perspektivische schematische Explosionsansicht eines erfindungsgemässen Rastsystems gemäss der zweiten bevorzugten Ausführungsform;
Figur 14a zeigt eine Schnittansicht eines erfindungsgemässen Rastsystems gemäss der zweiten bevorzugten Ausführungsform;
Figur 14b zeigt eine Schnittansicht eines erfindungsgemässen Rastsystems gemäss einer dritten bevorzugten Ausführungsform;
Figur 15 zeigt eine perspektivische schematische Ansicht einer erfindungsgemässen Drückerrosette gemäss der zweiten bevorzugten Ausführungsform; und
Figur 16 zeigt eine Schnittansicht eines erfindungsgemässen Rastsystems gemäss einer vierten bevorzugten Ausführungsform.

### Bevorzugte Ausführungsformen der Erfindung

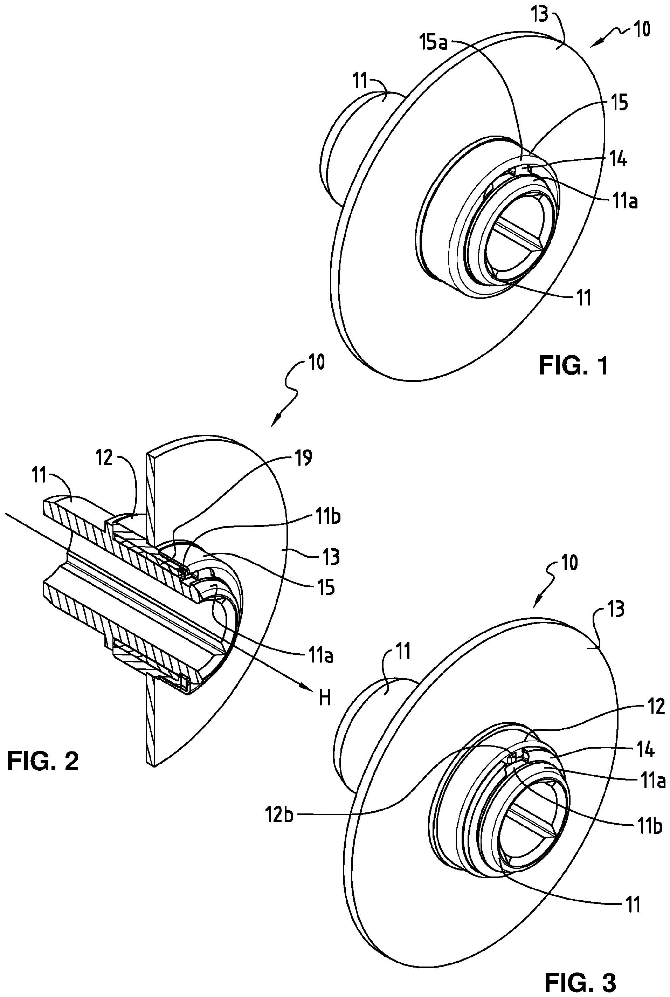

Figuren 1 und 2 zeigen perspektivische schematische Ansichten eines Rastsystems 10 umfassend eine Drückerdornhülse 11 und eine Drückerrosette 12 gemäss einer ersten bevorzugten Ausführungsform der vorliegenden Erfindung. Figuren 1 und 2 zeigen das Rastsystem 10 nachdem die Dornhülse 11 in der Drückerrosette 12 eingeführt wurde. Ein Sprengring 14 befindet sich in einem Einstich 11b (siehe Figur 2) der Dornhülse 11 und hält Dornhülse 11 und Drückerrosette 12 zusammen. Das Rastsystem 10 umfasst auch eine Abdeckhülse 15, die fest an die Drückerrosette 12 angebracht werden kann. Figur 3 zeigt das Rastsystem 10 aus dem gleichen Blickwinkel wie in Figur 2, jedoch ohne Abdeckhülse 15. Dadurch sind Sprengring 14 und Einstich 11b besser erkennbar.

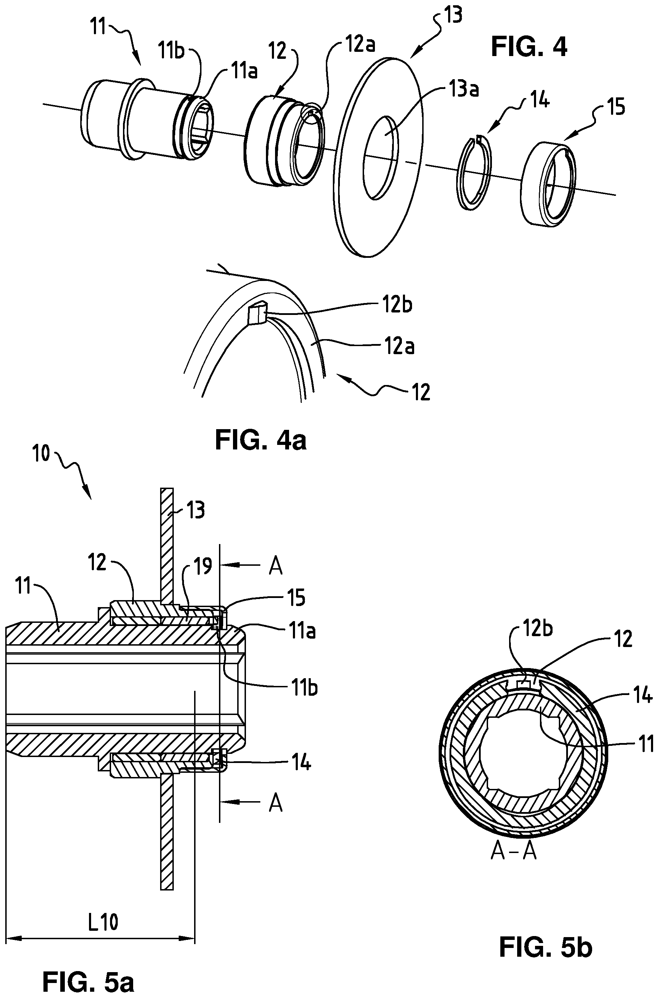

Figur 4 zeigt eine Explosionsansicht des Rastsystems 10 gemäss erster bevorzugten Ausführungsform der vorliegenden Erfindung. Wie dieser Figur zu entnehmen ist, verfügt das Rastsystem 10 neben den oben erwähnten Elementen auch über eine Grundplatte 13, die als Abdeckplatte des Beschlags dienen kann.

Die Drückerrosette 12 ist derart konfiguriert, dass sie bei der Montage in die Öffnung 13a der Grundplatte 13 eingedrückt werden kann, wobei dabei eine feste Verbindung zwischen der Drückerrosette und der Grundplatte erstellt wird. Wenn die Drückerrosette 12 und die Grundplatte 13 zusammen verbunden sind, kann in einem weiteren Schritt der Montage der Sprengring 14 auf die Sprengringauflagefläche 12a der Drückerrosette gelegt und die Abdeckhülse 15 über den Sprengring 14 und die Drückerrosette 12 angebracht werden. Im letzten Montageschritt wird die Dornhülse 11 mit Drücker (hier nicht gezeigt) durch die Drückerrosette 12 entlang der Drehachse H (siehe Figur 2) eingedrückt.

Wie in den Figuren 1 bis 4 ersichtlich, verfügt die Dornhülse 11 über eine konische Einfuhrfläche 11a und über einen Einstich 11b. Dank der konischen Form der Einfuhrfläche 11a wird der Sprengring 14 während dem Eindrücken der Dornhülse 11 in die Drückerrosette 12 gespreizt. Der Sprengring 14 rastet schliesslich in den Einstich 11b der Dornhülse 11 und hält dann die Dornhülse 11 mit der Drückerrosette 12 zusammen.

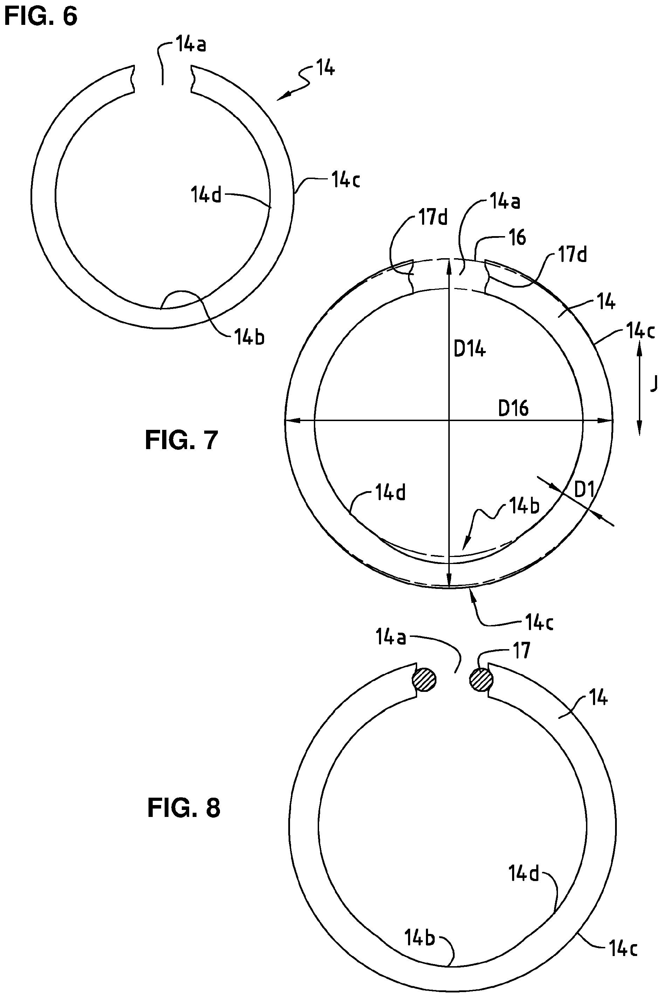

Wie in den Figuren 5a, 5b und 6 gezeigt, weist der Sprengring 14 eine Form einer an einer Stelle 14a geöffneten ringförmigen Scheibe auf. Vorteilhafterweise verfügt der Springring 14 auch über eine Einbuchtung 14b, die einen Bereich reduzierter Breite der Scheibe darstellt. Durch die, vorzugsweise bogenförmige, Einbuchtung 14b wird die Federspannung des Springrings 14 stark reduziert und der letztere kann somit schon mit einer kurzen und steilen konischen Einfuhrfläche 11a bei der Montage gespreizt werden.

Figur 7 zeigt eine bevorzugte Ausführungsform eines Sprengrings 14 für das erfindungsgemässe Rastsystem (nicht dargestellt). Vergleicht man jetzt die Form des Springrings 14 mit der Form einer perfekt ringförmigen Scheibe 16 der gleiche Dicke D1, sieht man, dass die äussere Kontur 14c des Sprengrings 14 entlang der Richtung J leicht nach aussen verformt ist. Anders formuliert vergrössert sich der Durchmesser D14 der äusseren Kontur 14c des Sprengrings 14 in Richtung der Ringöffnung 14a und der Einbuchtung 14b. Denkbar wäre aber, dass sich der Durchmesser D14 nur in Richtung der Ringöffnung oder der Einbuchtung vergrössert.

Dank der Form der äusseren Kontur 14c des Sprengrings 14 kann sich der Sprengring 14, wenn dieser zwischen Drückerrosette 12 und Abdeckhülse 15 positioniert ist, weniger aus der Drehachse H des Rastsystems 10 bewegen. Dadurch ist sichergestellt, dass die konischen Einfuhrfläche 11a an der Dornhülse 11 immer in die Öffnung des Sprengrings 14 leicht eingeführt werden kann. Es stellt darüber hinaus sicher, dass sich der Sprengring 14 während der Betätigung des Beschlags weniger um die Drehachse H des Rastsystems 10 drehen kann. Wie nachfolgend erläutert, ermöglicht das eine einfachere Demontage des Rastsystems.

Für die Demontage des Beschlags, beziehungsweise das Auseinandernehmen der Dornhülse 11 und der Drückerrosette 12, kann mittels einer dafür geeigneten Zange 17 (siehe Figur 8) der Sprengring 14 wieder gespreizt werden. Mit gespreiztem Sprengring 14 kann die Dornhülse 11 von der Drückerrosette 12 wieder getrennt werden. Wie in den Figuren 7 und 8 ersichtlich weist der Sprengring 14 besondere Zangenfreistellungen 17d auf, welche eine Positionierung der Zange 17 am Sprengring 14 vereinfacht und ein Abrutschen der Zange 17 bei der Demontage verhindert.

Damit die Zange 17 bei der Demontage Zugang zum Sprengring 14 haben kann, verfügt die Abdeckhülse 15 über eine Öffnung 15a. Selbstverständlich kann die Demontage nur dann geschehen, wenn die Position der Ringöffnung 14a des Sprengrings 14 und die Position der Öffnung 15a der Abdeckhülse 15 genügend übereinstimmen. Um zu gewährleisten, dass sich die RingÖffnung 14a des Sprengrings 14 immer an einer für die Demontage geeigneten Position befindet, weist die Drückerrosette 12, spezifisch die Sprengringauflagefläche 12a der Drückerrosette, eine Prägung 12b auf. Die Dimension dieser Prägung 12b ist derart ausgewählt, dass sich der Sprengring 14 nur begrenzt um die Drehachse H des Rastsystems 10 drehen kann. Somit befindet sich der Sprengring 14 immer in einer für die Demontage geeigneten Position.

Wie in Figur 4a gezeigt, weist die Prägung 12b vorteilhafterweise eine pyramidenförmige Form auf. Dies ermöglicht unter anderem eine einfache Positionierung der Zange 17 für die Demontage.

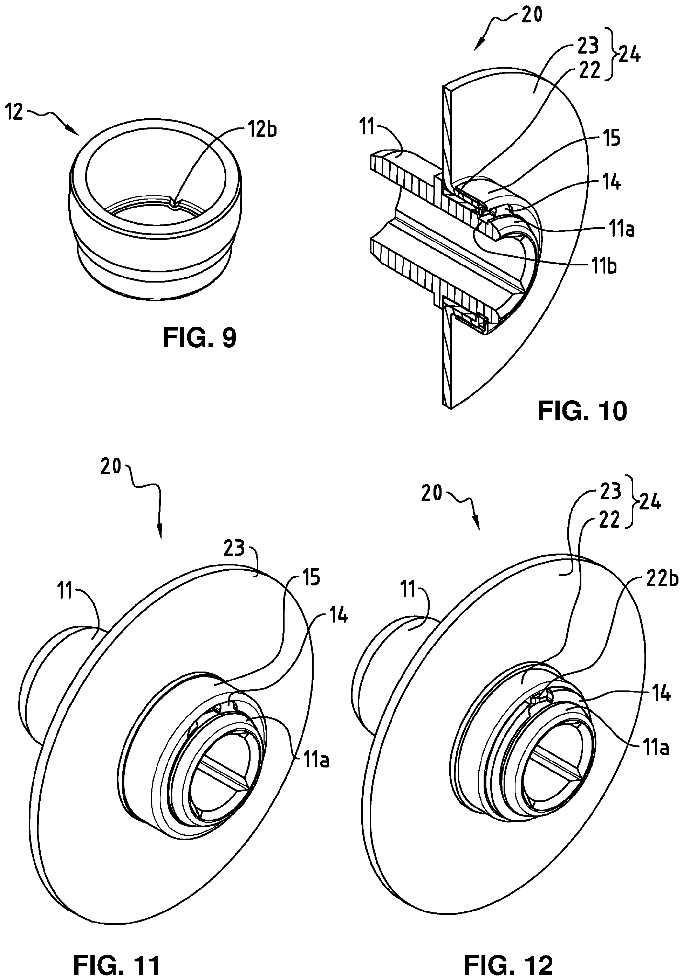

Wie aus Figur 9 zu entnehmen ist, kann die Prägung 12b vorteilhafterweise mittels Einkerbung der Sprengringauflagefläche 12a der Drückerrosette 12 gebildet werden.

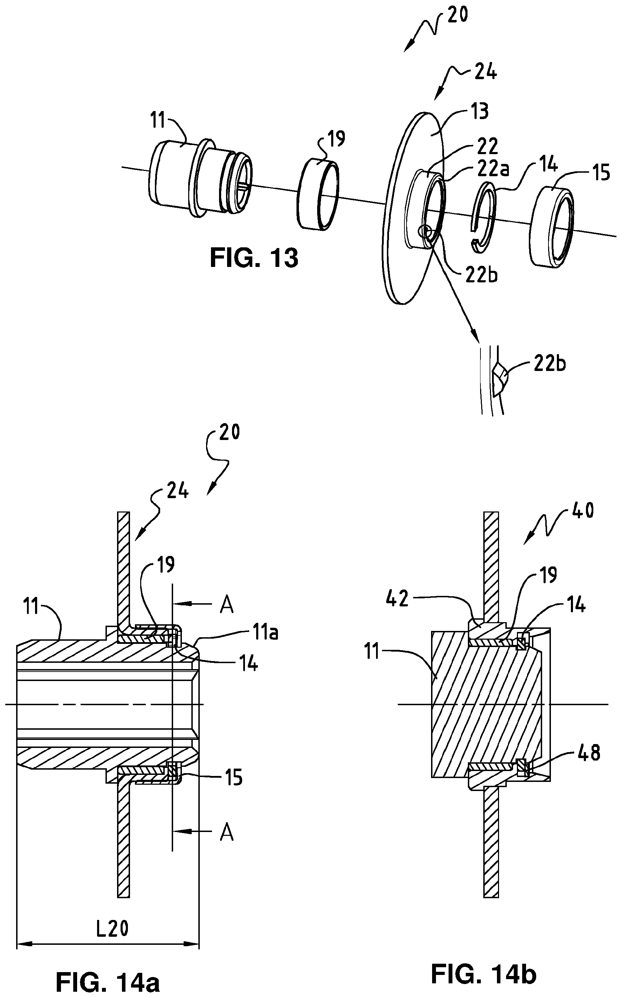

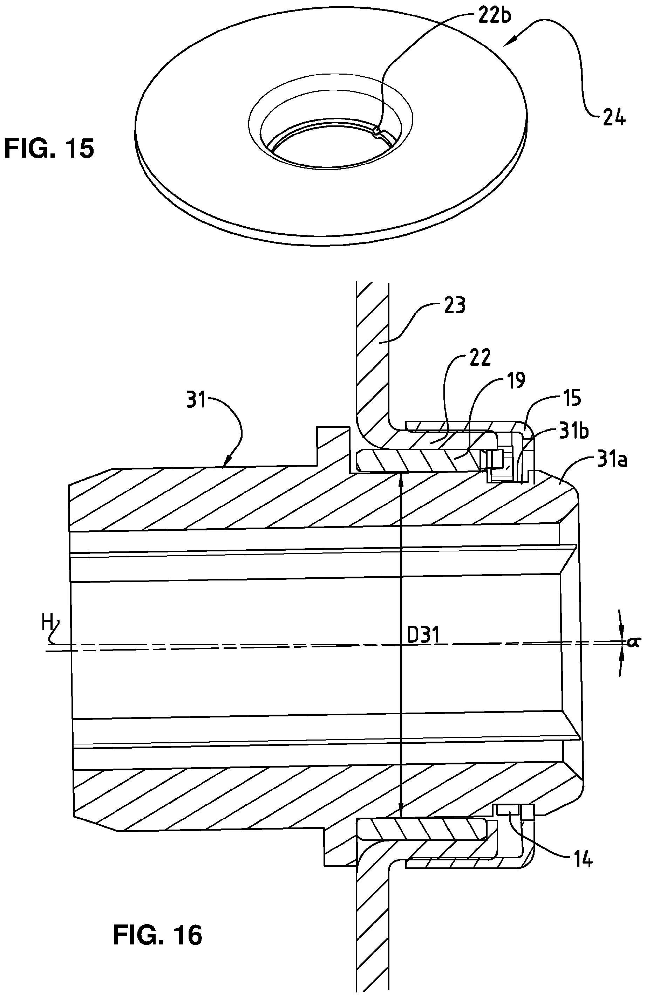

Figuren 10 bis 14a zeigen ein Rastsystem 20 für einen Tür- oder Fensterbeschlag gemäss einer weiteren bevorzugten Ausführungsform der vorliegenden Erfindung. Das Rastsystem 20 unterscheidet sich vom Rastsystem 10 durch die Ausgestaltung der Drückerrosette und der Grundplatte. Während beim Rastsystem 10 diese Komponente als zwei getrennte aber fest verbindbare Elemente konzipiert sind, bilden Drückerrosette 22 und Grundplatte 23 im Rastsystem 20 eine einzige Komponente 24, wie in Figur 13 gezeigt. Dadurch kann die gesamte Länge L20 des Rastsystems 20 kleiner als die Länge L10 des Rastsystems 10 gehalten werden, wie aus dem Vergleich der Figuren 5a und 14 ersichtlich wird. Ansonsten entsprechen die Elemente des Rastsystem 20 denen des Rastsystems 10. Speziell ist im Rastsystem 20 auch eine Prägung 22b auf der Sprengringauflagefläche der Drückerrosette 22 vorgesehen, um eine Verdrehung des Sprengrings 14 zu verhindern und damit eine einfache Demontage zu gewährleisten. Die Prägung 22b kann, wie in Figur 15 illustriert, durch Einkerbung der Sprengringauflagefläche 22a gebildet werden.

Anstatt eine Abdeckhülse 15 wie in der Ausführungsform der Figur 14a vorzusehen, ist es möglich, dass sich der Sprengring 14 zwischen der Drückerrosette 42 und einer Abdeckscheibe 48 befindet. Wie in Figur 14b gezeigt, die ein Rastsystem 40 für Tür- oder Fensterbeschläge gemäss einer dritten Ausführungsform der vorliegenden Erfindung darstellt, kann dadurch auf eine Abdeckhülse verzichtet werden. Wie in Figur 14b zu sehen ist, ist es vorteilhaft, wenn die Abdeckscheibe 48 eine asymmetrische Form aufweist. Dadurch kann das Einführen der Dornhülse in die Drückerrosette einfacher durchgeführt werden. Die Abdeckscheibe 48 muss einzig gewährleisten, dass der Sprengring 14 aus der Drückerrosette nicht rauskommen kann. Darüber hinaus vereinfacht die asymmetrische Form der Abdeckscheibe 48 die Demontage des Rastsystems, da dadurch Zugang zur Öffnung des Sprengrings 14 gewährleistet werden kann.

Figur 16 zeigt ein Rastsystem 30 für Tür- oder Fensterbeschläge gemäss einer weiteren Ausführungsform der vorliegenden Erfindung. **In** dieser Ausführungsform sind Einstich 31b und Aussendurchmesser D31 der Dornhülse 31, wie in Figur 16 dargestellt, derart konfiguriert, dass die Dornhülse 31 einen Winkelfehler α gegenüber der Drehachse H von bis zu 4°, vorzugsweise bis 2°, ausgleichen kann. Dadurch kann ein Beschlag mit dem Rastsystem 30 auch bei grösseren Abweichungen einwandfrei funktionieren. Dies ist besonders vorteilhaft in Fällen, in welchen Drücker auf beiden Türseiten an die jeweiligen Dornhülsen 31 angebracht werden. Die Dornhülsen sind mit einem Vierkantdorn (hier nicht gezeigt) verbunden, welcher im mittleren Bereich auch mit einem Schloss verbunden ist. Aufgrund der Fertigungstoleranzen bei der Verarbeitung von Türen, können die Dornhülsen in den meisten Fällen nicht konzentrisch zueinander ausgerichtet werden. Dies führt zu erhöhter Reibung und eine nicht einwandfreie Funktion des Beschlags. Eine erhöhte Reibung ist besonders problematisch im Fall von Schlössern mit schwachen Hochhaltefedern. Durch die erhöhte Reibung ist es nicht selten, dass die Kraft der Feder nicht mehr ausreicht, um die Drücker nach der Betätigung wieder in Nullstellung zu bringen. In der in Figur 16 gezeigten Ausführungsform bilden Drückerrosette und Grundplatte nur ein Element (wie im Rastsystem 20). Es ist aber selbstverständlich möglich, das Rastsystem 30 so vorzusehen, dass die Drückerrosette und die Grundplatte zwei getrennte Elemente bilden (wie im Rastsystem 10).

Zu beachten ist, dass in allen Ausführungsformen des erfindungsgemässen Rastsystems 10, 20, 30, 40 ein oder mehrere Gleitelemente 19 zwischen der Dornhülse und der Drückerrosette vorgesehen sind. Durch die Gleitelemente 19 kann die Dornhülse mit minimaler Reibung in der Drückerrosette drehen.

Zum Schluss sei nochmals darauf hingewiesen, dass die hier beispielhaft beschriebenen Ausführungsformen nur Realisierungsmöglichkeiten der erfindungsgemässen Ideen darstellen und keinesfalls als limitierend angesehen werden sollen. Der Fachmann wird verstehen, dass noch andere Implementierungen der Erfindung und weitere Elemente möglich sind, ohne dass die wesentlichen Merkmale der durch die Patentansprüche definierten Erfindung vernachlässigt werden.

## Patentansprüche

1. Drückerrosette (12, 22) für Rastsysteme eines Tür- oder Fensterbeschlags, umfassend eine Sprengringauflagefläche 12a, 22a) für die Aufnahme eines Sprengrings,
**dadurch gekennzeichnet, dass**
die Sprengringauflagefläche (12a, 22a) eine nach aussen gerichtete sich in axialer Richtung erstreckende Prägung (12b, 22b) aufweist.

2. Drückerrosette gemäss Anspruch 1, wobei die Prägung (12b, 22b) pyramidenförmig ist.

3. Rastsystem für einen Tür- oder Fensterbeschlag, umfassend eine Drückerrosette (12, 22) gemäß Anspruch 1 und/oder 2,
eine Dornhülse (11, 31) an welche ein Betätigungselement drehbarfest anbringbar ist, wobei die Dornhülse (31) endseitig eine konische Einfuhrfläche (11a, 31a) und daran anschliessend einen Einstich (11b, 31b) aufweist,
einen Sprengring (14), welcher so bemessen ist, dass er über die konische Einfuhrfläche (11a, 31a) der Dornhülse (11,31) schiebbar ist und dabei aufgespreizt wird, und dass er in den Einstich (11b, 31b) einrastbar ist, wobei sich der Sprengring (14) zwischen der Drückerrosette (12, 22) und einer Abdeckhülse (15) oder zwischen der Drückerrosette (12,22) und einer Abdeckscheibe (48) befindet, und wobei die Dornhülse um eine Drehachse (H) des Rastsystems (30) drehbar ist,
**dadurch gekennzeichnet, dass**
der Sprengring (14) an einer Stelle eine Ringöffnung (14a) und die Drückerrosette (12, 22) eine Prägung (12b, 22b) aufweisen, wobei der Sprengring (14) derart orientiert ist, dass die Ringöffnung (14a) mit der Position der Prägung (12b, 22b) der Drückerrosette zusammenfällt.

4. Rastsystem gemäss Anspruch 3, wobei die Dimensionen der Prägung (12b, 22b) so ausgewählt sind, dass der Sprengring nur um einen Winkel um die Drehachse (H) des Rastsystems drehbar ist, welcher kleiner oder gleich wie der Winkel ist, welcher durch die Ringöffnung (14a) definiert ist.

5. Rastsystem gemäss einem der Ansprüche 3 oder 4, wobei die Dimensionen des Einstichs (11b, 21b, 31b) und der Aussendurchmesser der Dornhülse (D31) derart gewählt sind, dass die Dornhülse um einen Winkel von bis zu 4°, vorteilhafterweise bis zu 2°, gegenüber der Drehachse (H) des Rastsystems kippbar ist.

6. Rastsystem gemäss einem der Ansprüche 3 bis 5, wobei sich in radialer Richtung zwischen Dornhülse und Drückerrosette ein Gleitelement (19) befindet.

7. Rastsystem gemäss einem der vorhergehenden Ansprüche, **dadurch gekennzeichnet, dass** der Sprengring (14) in Form einer an einer Stelle (14a) geöffneten ringförmigen Scheibe, umfassend eine innere Kontur (14d) und eine äussere Kontur (14c) vorliegt, wobei der Sprengring (14) eine Einbuchtung (14b) aufweist, die einen Bereich reduzierter Breite der Scheibe darstellt, wobei sich die Einbuchtung (14) an der der Ringöffnung (14a) gegenüberliegenden Seite der Scheibe befindet, und wobei der Springring (14) bei der Ringöffnung (14a) Zangenfreistellungen (17d) für das Eingreifen von Zangenbacken einer Zange, insbesondere einer Greifzange oder einer Spreizzange, aufweist, wobei sich der Durchmesser (D14) der äusseren Kontur (14c) des Sprengrings (14) in Richtung der Ringöffnung (14a) vergrössert.

8. Rastsystem gemäss Anspruch 6, **dadurch gekennzeichnet, dass** sich der Durchmesser (D14) der äusseren Kontur (14c) des Sprengrings (14) in Richtung der Einbuchtung (14b) vergrössert.

9. Tür- oder Fensterbeschlag umfassend eine Drückerrosette (12, 22) gemäss einem der Ansprüche 1 oder 2 und/oder ein Rastsystem gemäss einem der Ansprüche 3 bis 8.

## Claims

1. Pusher escutcheon (12, 22) for locking systems of a door or window fitting, comprising a snap ring bearing surface (12a, 22a) for receiving a snap ring,
**characterized in that**
the snap ring bearing surface (12a, 22a) has an outwardly directed embossing (12b, 22b) extending in the axial direction.

2. Pusher escutcheon according to claim 1, whereby the embossing (12b, 22b) is of pyramidal shape.

3. Locking system for a door or window fitting, comprising a pusher escutcheon (12, 22) according to claim 1 and/or 2,
a mandrel sleeve (11, 31) to which an actuating element is able to be attached in a rotationally fixed manner, whereby the mandrel sleeve (31) has a conical insertion surface (11a, 31a) at the end and a recess (11b, 31b) adjacent thereto,
a snap ring (14), which is dimensioned such that it is able to be pushed over the conical insertion surface (11a, 31a) of the mandrel sleeve (11, 31) and is thereby spread open, and that it is able to be latched into the recess (11b, 31b), wherein the snap ring (14) is located between the pusher escutcheon (12, 22) and a cover sleeve (15) or between the pusher escutcheon (12, 22) and a cover disc (48), and wherein the mandrel sleeve is rotatable about an axis of rotation (H) of the locking system (30),
**characterized in that**
the snap ring (14) has a ring opening (14a) at one place and the pusher escutcheon (12, 22) has an embossing (12b, 22b), whereby the snap ring (14) is orientated in such a way that the ring opening (14a) coincides with the position of the embossing (12b, 22b) of the pusher escutcheon

4. Locking system according to claim 3, whereby the dimensions of the embossing (12b, 22b) are selected such that the snap ring is only rotatable about the axis of rotation (H) of the locking system by an angle which is smaller than or equal to the angle defined by the ring opening (14a).

5. Locking system according to one of the claims 3 or 4, whereby the dimensions of the recess (11b, 21b, 31b) and the outer diameter of the mandrel sleeve (D31) are selected in such a way that the mandrel sleeve is able to be tilted through an angle of up to 4°, advantageously up to 2°, relative to the axis of rotation (H) of the locking system

6. Locking system according to one of the claims 3 to 5, whereby a sliding element (19) is located in the radial direction between the mandrel sleeve and the pusher escutcheon.

7. Locking system according to one of the preceding claims, **characterized in that** the snap ring (14) is in the form of an annular disc which is open at one place (14a) and comprises an inner contour (14d) and an outer contour (14c), the snap ring (14) having an indentation (14b) which represents a region of reduced width of the disc, the indentation (14b) being located on the side of the disc opposite the ring opening (14a), and whereby the snap ring (14) at the ring opening (14a) has pincer release positions (17d) for the engagement of pincer jaws of pincers, in particular gripping pincers or spreading pincers, whereby the diameter (D14) of the outer contour (14c) of the snap ring (14) increases in the direction of the ring opening (14a)

8. Locking system according to claim 6, **characterized in that** the diameter (D14) of the outer contour (14c) of the snap ring (14) increases in the direction of the indentation (14b).

9. Door or window fitting comprising a pusher escutcheon (12, 22) according to one of the claims 1 or 2 and/or a locking system according to one of the claims 3 to 8.

## Revendications

1. Rosette de poussoir (12, 22) pour systèmes de verrouillage d'une ferrure de porte ou de fenêtre, comprenant une surface d'appui de jonc (12a, 22a) destinée à recevoir un anneau d'arrêt,
**caractérisé en ce que**
la surface d'appui du jonc (12a, 22a) présente un embossage (12b, 22b) orienté vers l'extérieur et s'étendant dans la direction axiale.

2. Rosette de poussoir selon la revendication 1, l'embossage (12b, 22b) étant de forme pyramidale.

3. Système de verrouillage pour une ferrure de porte ou de fenêtre, comprenant une rosette de poussoir (12,22) selon la revendication 1 ou 2,
une douille de mandrin (11, 31) à laquelle un élément d'actionnement peut être monté solidaire en rotation, la douille de mandrin (31) présentant une surface d'insertion conique (11a, 31a) à son extrémité et une gorge (11b, 31b) adjacente à celle-ci,
un anneau d'arrêt (14), qui est dimensionné de manière à pouvoir être poussé sur la surface d'insertion conique (11a, 31a) du manchon de mandrin (11, 31) et ainsi être ouvert, et de manière à pouvoir être encliqueté dans la gorge (11b, 31b), dans lequel l'anneau d'arrêt (14) est situé entre la rosette de poussoir (12, 22) et un manchon de recouvrement (15) ou entre la rosette de poussoir (12, 22) et un disque de recouvrement (48), et le manchon de mandrin étant rotatif autour d'un axe de rotation (H) du système de verrouillage (30),
**caractérisé en ce que**
l'anneau d'arrêt (14) présente une ouverture annulaire (14a) à un endroit et la rosette de poussoir (12, 22) présente un embossage (12b, 22b), l'anneau d'arrêt (14) étant orienté de manière à ce que l'ouverture annulaire (14a) coïncide avec la position de l'embossage (12b, 22b) de la rosette de poussoir.

4. Système de verrouillage selon la revendication 3, les dimensions de l'embossage (12b, 22b) étant choisies de manière à ce que l'anneau d'arrêt ne puisse tourner autour de l'axe de rotation (H) du système de verrouillage que d'un angle inférieur ou égal à l'angle défini par l'ouverture annulaire (14a).

5. Système de verrouillage selon l'une des revendications 3 ou 4, les dimensions de l'évidement (11b, 21b, 31b) et le diamètre extérieur du manchon du mandrin (D31) étant choisis de manière à ce que le manchon du mandrin puisse être incliné d'un angle allant jusqu'à 4°, avantageusement jusqu'à 2°, par rapport à l'axe de rotation (H) du système de verrouillage.

6. Système de verrouillage selon l'une des revendications 3 à 5, dans lequel un élément coulissant (19) est situé dans la direction radiale entre le manchon du mandrin et la rosette de poussoir.

7. Système de verrouillage selon l'une des revendications précédentes, **caractérisé en ce que** l'anneau d'arrêt (14) se présente sous la forme d'un disque annulaire ouvert à un endroit (14a) et comprenant un contour intérieur (14d) et un contour extérieur (14c), l'anneau d'arrêt (14) présentant une indentation (14b) qui représente une région de largeur réduite du disque, l'indentation (14b) étant située sur le côté du disque opposé à l'ouverture annulaire (14a), et l'anneau d'arrêt (14) ayant des positions de dégagement de pince (17d) pour l'engagement de mâchoires de pinces au niveau de l'ouverture annulaire (14a), en particulier de pinces de préhension ou de pinces d'écartement, le diamètre (D14) du contour extérieur (14c) de l'anneau d'arrêt (14) augmentant en direction de l'ouverture annulaire (14a).

8. Système de verrouillage selon la revendication 6, **caractérisé par le fait que** le diamètre (D14) du contour extérieur (14c) de l'anneau d'arrêt (14) augmente en direction de l'indentation (14b).

9. Ferrure de porte ou de fenêtre comprenant une rosette de poussoir (12, 22) selon l'une des revendications 1 ou 2 et/ou un système de verrouillage selon l'une des revendications 3 à 8.
